# EUROPEAN PATENT SPECIFICATION

(11) **EP 3 721 144 B1**
(45) Date of publication and mention of the grant of the patent: **30.08.2023**
(21) Application number: 18913594.0
(22) Date of filing: 19.11.2018
(51) Int. Cl.: F24F 5/00, F24F 6/06, F24F 6/12

(54) **A MODULAR PRE-COOLING SYSTEM**
MODULARES VORKÜHLSYSTEM
SYSTÈME DE PRÉ-REFROIDISSEMENT MODULAIRE

(30) Priority: 04.12.2017 TR 201719470
(43) Date of publication of application: 14.10.2020
(73) Proprietor: Aksuyek, Cuneyt, Karsiyaka/Izmir (TR)
(72) Inventor: Aksuyek, Cuneyt, Karsiyaka/Izmir (TR)
(74) Representative: Demirkiran, Hasan
(86) International application number: PCT/TR2018/050706
(87) International publication number: WO 2019/194767

(56) References cited:
- WO-A1-2015/152497
- CN-A- 107 366 985
- FR-A- 869 527
- GB-A- 2 378 501
- TR-A2- 201 007 003
- US-A- 3 705 479
- US-A- 3 740 959
- US-A- 5 337 582
- US-A- 5 529 536
- US-A1- 2003 221 440
- US-A1- 2011 023 506
- US-A1- 2017 097 166

## Description

### Technical Field

The invention relates to a modular pre-cooling system.

In particular, the invention relates to a humidification-based (evaporative-adiabatic) modular cooling system which provides energy efficiency, reduces or eliminates filter and maintenance costs by cooling the intake air of the system when the ambient air temperature of the central air-cooled systems (Electricity generation systems, Gas & Steam Turbine power plants, Geothermal power plants, Cogeneration, Trigeneration systems with electricity consumption comfort and / or process cooling systems, Air-cooled Chiller, Dry Cooler, Roof-top, etc.) is higher than the ISO design conditions.

### Prior Art

Since heat transfer coefficient of water is high, it has high evaporation tendency and absorbs heat from its environment during evaporation. When the water comes into contact with air, it takes heat from the air to cool the air and thus increases the amount of water vapor in the air. In the logic of evaporative cooling, the air is brought into contact with the highest possible amount of water and thus cooling of the air is provided. Evaporative cooling is achieved by evaporating water in an air stream at ambient temperature. In this cooling method, cooling is achieved by decreasing the dry bulb temperature of the air at the fixed wet bulb temperature and by increasing the amount of moisture contained in the air. Although evaporative cooling can be achieved by direct contact of air with water, it can also be achieved indirectly or by combining both systems.

In direct evaporative cooling process, air is passed through a water block. As a result of direct contact of air with water, the air is brought to the desired conditions due to mass and heat transfer. The most common dry-bulb temperature difference that can be achieved in this method is the difference between the dry and wet bulb temperatures of the incoming air. The efficiency of direct evaporative cooling systems varies between 85-90% and reduces cooling costs by 25-40% when used with vapor compression cooling systems. Direct evaporative cooling systems are frequently used in factories, manufacturing plants (especially for textiles), open spaces and livestock (dairy cattle and poultry) sectors because of their economical advantages.

One of the ways of applying continuous and in large amounts of evaporative cooling is the use of pads. In this type of cooling process, water flow from the top of a pad filled with cavities is ensured, during the continuous movement of the mentioned water in the pad, hot air passes through the cavities in the pad and contacts with the water and thus cooling the air with the water is achieved. With this method, padded systems, due to their nature, not only create a loss of pressure of 200-250 Pascal in the intake air of the systems to be applied, and occasionally the water particles detached from the pad can wet the condensers or serpentines, but also accelerate corrosion in copper tube serpentines with aluminum blade by creating a battery effect and formation of sludge that is hard to clean via the dust present in the air, so it can cause serious damage to the turbine blades. In order to eliminate such disadvantages, in the case of air-cooled (chiller, rooftop, dry cooler, etc.) systems an additional separator (drift eliminator) is used for pad cooling, the pressure loss to be created in the intake air is minimum 50 pascal and the pressure loss with the pressure loss of 250-300 pascal caused by the production structure/ nature of the pad can reach to 300-350 pascal in total, yet in an evaporative cooling system, which is intended to be carried out without stopping the systems and without causing harm to their original structure, a large amount of the intended savings can be eliminated by the internal consumption of the additional fan power that will have to be used to defeat the air resistance.

There are some applications in the national patent literature regarding the modular cooling system.

There is an application number TR201007003 registered on behalf of Cüneyt AKSUYEK in the prior art. The invention relates to a cooling system connected to the air inlet of an air-cooled refrigerant comprising at least one frame, at least one mesh fixed to said frame so as to remain at a distance from the cooler, at least one liquid spraying element which exerts a non-cooling from the external side of the said mesh, which is opposite to the cooler, and in the direction of air supply, at least one fluid supply kit for delivering liquid to said element, and at least one liquid-conducting element carrying the liquid from the fluid supply kit to the spray element, and the invention relates to the cooling method in which this system is used.

As a result, the existence of the above problems and the absence of an existing solution necessitated an improvement in the relevant technical field. US5529536 discloses an evaporative cooling humidifying of motor vehicle interior with a movable pad and water spray.

### The Purpose of the Invention

The invention includes a system which provides new technical advantages in addition to the product no TR201007003 registered on behalf of Cüneyt AKSUYEK mentioned above and reveals different aspects and expansions in this field.

The main purpose of the invention is to provide maximum energy efficiency in all areas with maximum recycling and maximum capacity increase, via reversing energy loss in power plants (Gas & Steam Turbine Power Plants, Geothermal Power Plants, Cogeneration, Trigeneration Systems, etc), and via using energy savings in air-cooled comfort or process cooling systems (Chiller, Dry Cooler, Roof-top etc.).

Another purpose of the invention is to control the pressure loss of the system in the intake air due to the temperature, humidity, and the contamination of filter networks from the internal and external air stations it has, and due to the gradual water spray system (pulverized, fogging) which is using the psychrometric analysis and calculation-based microprocessor with the instantaneous data received from the differential pressure sensors used to alert the operator, to eliminate the need for wastewater facilities resulting from unnecessary water consumption by using only the required amount of water and to eliminate the use of extra chemicals for the calcification of pads in large systems.

Another purpose of the invention is to prevent the existing systems from being stopped during installation by allowing easy installation with a kind of hybrid application without damaging the original structure of the systems, and also because of its modular and simple structure which can be increased in number according to the needs in the suction air areas of the systems.

Another purpose of the invention is to prevent the loss of labor and time by easy and serial installation, maintenance and service due to its modular system.

Another purpose of the invention is to use a wire-mesh air louver, which, in addition to being the wind shield in this modular evaporative system, also can serve as a pre-coarse filter holding leaves, paper, nylon, etc. which may come with suction air or wind behind it. This cooling system with rotating or fixed double-ply mesh structure to hold dust and particles in the suction air passing through this coarse filter present in the louver, in addition to providing a kind of dust suppression system before the mesh structure, by spraying high pressure water with the appropriate number and order of nozzles to automatically wash the mesh with excessive water to be intermittent, has a mixed and modular structure based on psychrometric control and calculation in comparison with the other evaporative (humidification based, adiabatic) cooling systems. In order to eliminate the corrosive effects and risks on the comfort-process cooling coils or damage of turbine blades in energy plants from the systems in which this modular evaporative system will be applied, an extra drift eliminator cell is used which will not exceed maximum 80 Pascal pressure along with external air shutters and meshes at the end of the modular system. This modular system also aims to increase the filter life and/or eliminate the filters which are a serious consumable material in natural gas plants by introducing a cooling system that can be installed easily with its modular components without stopping the air cooled systems which are intended to cool the suction air, and to maximize the time before the pollution-related maintenance period becomes necessary which causes extra energy inefficient operation in dry cooler, chiller, rooftop cooling systems used in plants such as geothermal power plants etc.

Another purpose of the invention is to be ensure that air-cooled systems, which are commonly used in the world due to due to their ease of investment, placement, use, etc., although the ISO design conditions in the outdoor air intake air temperature, which is based on the first production, remain low along with global warming, the invention provides a significant energy efficiency to be achieved in the ambient air intake temperatures which increase with each passing year. On the other hand, the purpose is to reduce or control carbon emissions, thus preventing global warming and supporting sustainable development.

The structural and characteristic features, working principle and all advantages provided by the invention are outlined in the drawings below and in the detailed description made by referring these figures will be understood clearly. Therefore, the evaluation should be made considering these figures and detailed explanations. The invention is set out in the appended set of claims.

### Brief Description of the Figures

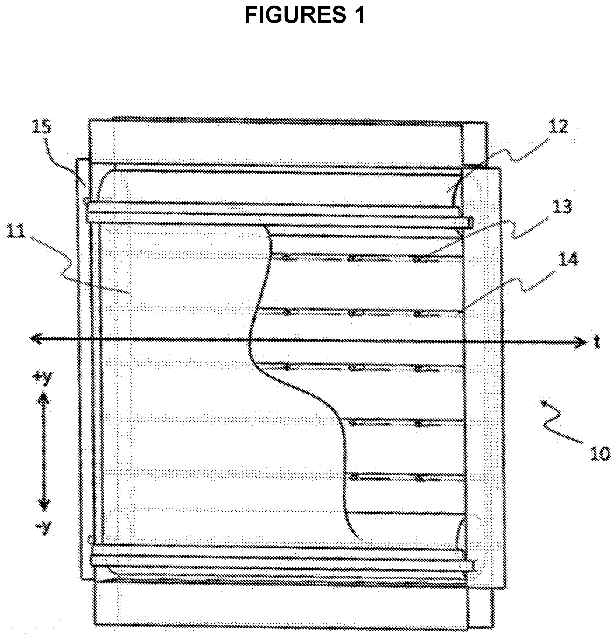

- Figure 1:: A two-dimensional view of the modular evaporative cooling system from the front.

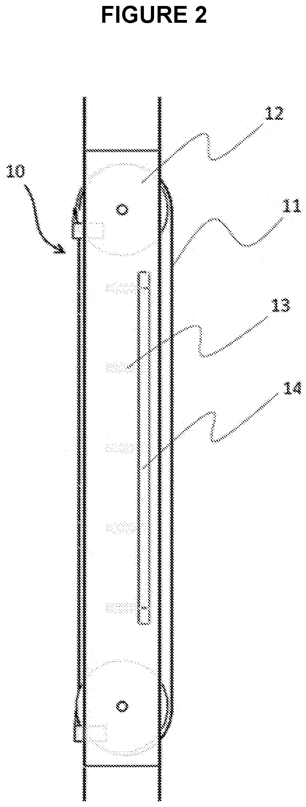

- Figure 2:: A two-dimensional view of the modular evaporative cooling system from the side.

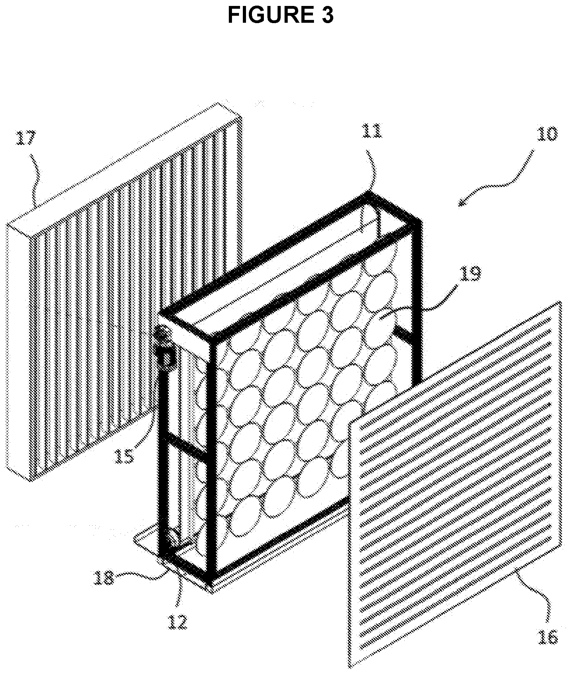

- Figure 3:: Demounted perspective view of the modular evaporative cooling system.

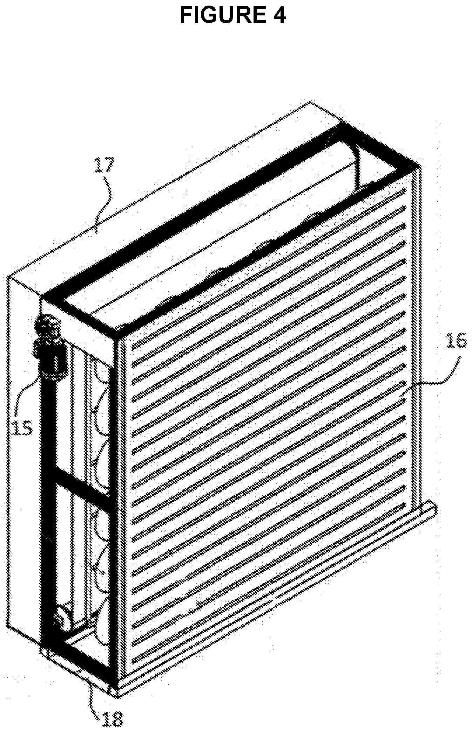

- Figure 4:: Mounted perspective view of the modular evaporative cooling system.

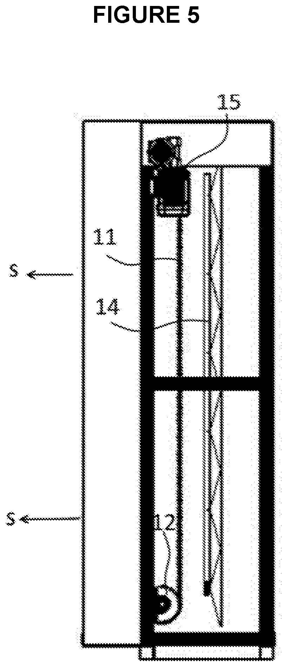

- Figure 5:: A side view of the modular evaporative cooling system.

### Reference Numbers

10. Pre-cooling system
11. Mesh mechanism
12. Rotating element
13. Nozzle
14. Transmission element
15. Actuation element
16. External air louvre
17. Drift eliminator
18. Container
19. Nozzle frame
S- Cooling direction

### Detailed Description of the Invention

The invention is a modular pre-cooling system (10) which can be applied externally without disturbing the original structure of the system or units when the outdoor temperature of the dry type refrigerant and central cooling systems required for comfort or process cooling of natural gas and geothermal power plants is higher than the ISO design conditions, comprising a mesh mechanism (11), a rotating element (12), a nozzle (13), a transmission element (14), an actuation element (15), a pump and temperature sensor, a humidity sensor, and a control unit consisting of differential pressure sensor with microprocessor.

As an its inventive feature, the present invention comprises a mesh mechanism (11) which is rotated by an actuation element (15) and positioned in the cooling direction S, which provides a movable surface to which water is sprayed by the nozzle (13). It comprises rotating elements (12) which are rotated by said actuation element (15) and which guide the rotation of the mesh mechanism (11). These rotating elements (12) have a cylindrical structure. Multiple nozzles (13) comprises multiple nozzle frames (19) for securing their places and at least one drift eliminator (17) positioned towards the cooling direction (S). On the other hand, it includes the external air louvres (16) which does not face towards the said cooling direction (S) are positioned on the front surface of the modular system where the external air suction is initiated.

The mesh mechanism (11) and the outer air louvre (16), comprising of double-ply mesh structure, located at the front or rear side of the pre-cooling system (10), or at the rear of the pre-cooling system so that the two meshes are at a certain distance, are intended to prevent the wind direction and intensity depending on the external environment from influencing the pulverized water coming out of the said nozzles (13) during the operation of the pre-cooling system (10). This prevention is provided by a tarpaulin or sheet metal partition that surrounds the sides of the pre-cooling system (10), allowing air to flow in one direction. Thanks to the double-ply structure of the mesh mechanism (11), the water at the dew point (the point where the air humidity reaches its maximum value) that is not evaporated by air gets caught into the both the first and the second meshes, so that the water is prevented from passing through the pre-cooling system (10). At the same time, in a dusty or dirty atmosphere caused by changing ambient conditions according to the location of power plants or comfort or process cooling systems, the dirt or dust particles circulating in the air are prevented from entering the cooling system (10) by getting them caught to the mesh mechanism (11) with a double-ply structure on the pre-cooling system (10).

The rotating elements (12), which rotate at a low speed constantly or are fixed, are located one under the other in the + y and -y direction of the "t" axis, which is assumed to pass through the center of the pre-cooling system (10). The said rotating elements (12) are drums with cylindrical geometries and are driven by the actuation element (15). At the edge of said rotating elements (12), with a deckle-edged front, at where the mesh mechanism (11) of the pre-cooling system (10) is attached, there are teeth formed by rubber, gum, etc., which are connected to the actuation element (15) and which make the mesh mechanism (11) rotate together with the rotating elements (12) or the ear chain system to which the meshes are connected. The rotating elements (12) connected to the actuation element (15) in the pre-cooling system (10) are always rotating, turning the mesh mechanism (11) which is connected to it, in a sense, the meshes next to the t-axis are continuously rotated to provide rotation.

In the said pre-cooling system (10), at the surface assumed to be in contact with the t-axis assumed to pass through the center of the pre-cooling system (10), there are nozzles (13) positioned in the middle of the front and rear of the mesh mechanism (11) to provide spraying to the pre-cooling system (10) and in the opposite direction to the air suction direction.

The nozzles (13) connected to the transmission element (14) of the cooling system (10) are positioned in front of the rotating elements (12) in the + y and -y direction of the t axis and the mesh mechanism (11) surrounding them. Said nozzles (13) spray water in the opposite direction of the air. In this way, the pulverized water is separated from each other by crashing in the air and the angle is expanded. With this effect, an evaporative action in the center of the mesh mechanism (11) is followed by a second evaporative effect, and via creating a kind of pressure lossless separator by getting caught the water particles that are likely to return into the back mesh, not only water is prevented from leaking from the system, but also a more efficient cooling is provided through a third evaporative effect.

Said transmission element (14) is a pipe which feeds water coming to the pre-cooling system (10) into the nozzles (13).

Control unit, which controls the air saturation according to the temperature and humidity values of the air, and the pollution of the water coming from the pump, consists of temperature sensor, humidity sensor and differential pressure sensors. The amount of water to be sprayed from said nozzles (13) is carried out by the temperature sensor, humidity sensor and differential pressure sensors to be positioned at the back and front side of the pre-cooling system (10).

The temperature sensor and humidity sensors monitor the air values instantly and transmit the data to the microprocessor to which it is connected. The microprocessor provides the psychrometric calculation of the water required for the saturation of air according to the data received from the temperature sensor and humidity sensors. As a result of the calculation, the microprocessor automatically adjusts the number of water and the number of the nozzles (13) to be operated or the flow rate of the speed controlled pumps. The differential pressure sensors control the contamination of the network device and the drift eliminator (17) through the pump feeding the water to be used by the nozzle (13) for spraying.

## Claims

1. A modular pre-cooling system (10) which can be applied externally to ambient suction air of dry type refrigerant and central cooling systems required for comfort or process cooling of natural gas and geothermal power plants without disturbing the original structure of the system or units, comprising a transmission element (14) to provide water flow, and nozzles (13) to spray the water coming from the said transmission element (14), wherein; it comprises,
• a mesh mechanism (11) comprising double-ply mesh structure, which is rotatable by an actuation element (15), located as facing to a cooling direction (S), and which provides a movable surface to which water is sprayed by said nozzles (13),
• rotating elements (12) which are rotated by said actuation element (15) and which guide a rotation of the mesh mechanism (11),
**characterized in that:**
- the mesh mechanism (11) with a double-ply mesh structure is configured to catch the amount of water that is not evaporated by air, and thus prevents passage/leakage of water from said pre-cooling system (10)
- the nozzles (13) with the transmission element (14) are positioned in front of the rotating elements (12), and the mesh mechanism (11) with the double-ply mesh structure is surrounding the nozzles (13), said nozzles (13) spraying water in the opposite direction to the air suction direction.

2. The modular pre-cooling system (10) according to Claim 1 wherein; said rotating
elements (12) have a cylindrical structure.

3. The modular pre-cooling system (10) according to Claim 1, wherein; it comprises movable double-ply mesh mechanism (11) surrounding the nozzles (13) along the circumference of the t axis 360°, surrounding the rotating elements (12).

4. The modular pre-cooling system (10) according to Claim 1, wherein; for securing their places, the said multiple nozzles (13) comprises multiple nozzle frames (19) embodying collector and manifold kit.

5. The modular pre-cooling system (10) according to Claim 1, wherein; it comprises at least one drift eliminator (17) positioned towards the cooling direction (S).

6. The modular pre-cooling system (10) according to Claim 1, wherein; it comprises external air louvres (16) having mesh at its rear and acting as a wind shield, which does not face towards the said cooling direction (S) and which is positioned on the front surface of the modular system where the ambient air is first entered.

7. The modular pre-cooling system (10) according to Claim 1, wherein; in order to eliminate unnecessary water consumption and use of extra chemicals for calcification of pads it comprises: a control unit comprising temperature sensor and humidity sensor that connected to a microprocessor which provides psychrometric calculation of the water required for the saturation of air according to data received from the temperature sensor and humidity sensors and differential pressure sensors that control the contamination of the network device and the drift eliminator (17) through the pump feeding the water to be used by the nozzle (13) for spraying.

## Patentansprüche

1. Modulares Vorkühlsystem (10), das zur Komfort- oder Prozesskühlung von Erdgas- und Geothermiekraftwerken extern auf die Umgebungssaugluft von Trockenkühl- und Zentralkühlsystemen angewendet werden kann, ohne die ursprüngliche Struktur des Systems oder der Einheiten zu stören, umfassend ein Übertragungselement (14) zur Bereitstellung eines Wasserflusses und Düsen (13) zum Versprühen des von dem Übertragungselement (14) bereitgestellten Wassers, umfassend weiterhin:
• eine Netzvorrichtung (11) mit doppellagiger Netzstruktur, die durch ein in einer Kühlrichtung (S) ausgerichtetes Betätigungselement (15) drehbar ist und eine bewegliche Oberfläche bereitstellt, die von den Düsen (13) mit Wasser besprüht wird,
• Drehelemente (12), die durch das Betätigungselement (15) angetrieben werden und bei der Drehbewegung der Netzvorrichtung (11) als Führung dienen,
**dadurch gekennzeichnet, dass:**
- die Netzvorrichtung (11) mit doppellagiger Netzstruktur so ausgestaltet ist, dass sie die nicht durch Luft verdunstete Wassermenge auffängt und so den Durchtritt / Austritt von Wasser aus dem Vorkühlsystem (10) verhindert,
- die Düsen (13) mit dem Übertragungselement (14) vor den Drehelementen (12) gelagert sind und die Düsen (13) von der Netzvorrichtung (11) mit doppellagiger Netzstruktur umgeben ist, wobei die Düsen (13) in einer der Luftansaugrichtung entgegengesetzter Richtung Wasser sprühen.

2. Modulares Vorkühlsystem (10) nach Anspruch 1, wobei die Drehelemente (12) eine zylindrische Struktur aufweisen.

3. Modulares Vorkühlsystem (10) nach Anspruch 1, wobei es eine bewegliche doppellagige Netzvorrichtung (11) umfasst, die die Düsen (13) entlang des Umfangs der sich um die Drehelemente (12) herum erstreckenden t-Achse 360° umgibt.

4. Modulares Vorkühlsystem (10) nach Anspruch 1, wobei die mehreren Düsen (13) als Befestigung mehrere Düsenrahmen (19) umfassen, die jeweils mit einem Sammler- und Verteilersatz ausgestaltet sind.

5. Modulares Vorkühlsystem (10) nach Anspruch 1, wobei es mindestens einen Tropfenabscheider (17) umfasst, der in Kühlrichtung (S) ausgerichtet ist.

6. Modulares Vorkühlsystem (10) nach Anspruch 1, wobei es externe Abluftgitter (16) umfasst, die an ihrer Rückseite mit einem Netz versehen sind und als Windschutz dienen, der entgegensetzt der Kühlrichtung (S) ausgerichtet ist und auf der Vorderseite des modularen Systems angeordnet ist, wo die Umgebungsluft zuerst eintritt.

7. Modulares Vorkühlsystem (10) nach Anspruch 1, wobei zur es zur Vermeidung unnötigen Wasserverbrauchs und Verwendung zusätzlicher Chemikalien gegen die Verkalkung von Pads eine Steuereinheit umfasst, die mit einem Temperatursensor und einem Feuchtigkeitssensor versehen ist, die mit einem Mikroprozessor verbunden ist, der anhand den vom Temperatursensor und den Feuchtigkeitssensoren empfangenen Daten die für die Sättigung der Luft erforderliche Wassermenge psychometrisch berechnet, sowie Differenzdrucksensoren, die die Verschmutzung des Netzwerkgeräts und des Tropfenabscheiders (17) durch die Pumpe erkennen, die das von der Düse (13) zum Sprühen verwendete Wasser fördert.

## Revendications

1. Un système de pré-refroidissement modulaire (10) qui peut être appliqué extérieurement à l'air ambiant d'aspiration de réfrigérant de type sec et de systèmes de refroidissement central requis pour le refroidissement de confort ou de processus de centrales électriques au gaz naturel et géothermiques sans perturber la structure originale du système ou des unités, comprenant un élément de transmission (14) pour fournir un débit d'eau, et des buses (13) pour pulvériser l'eau provenant dudit élément de transmission (14), dans lequel ; il comporte,
• un mécanisme de maille (11) comprenant une structure de maille à double épaisseur, qui peut être mis en rotation par un élément d'actionnement (15), situé face à une direction de refroidissement (S), et qui fournit une surface mobile sur laquelle de l'eau est pulvérisée par lesdites buses (13),
• des éléments rotatifs (12) qui sont entraînés en rotation par ledit élément d'actionnement (15) et qui guident une rotation du mécanisme de maille (11),
**caractérisé en ce que :**
- le mécanisme de maille (11) avec une structure de maille double couche est configuré pour capter la quantité d'eau qui n'est pas évaporée par l'air, et empêche ainsi le passage/ la fuite d'eau dudit système de pré-refroidissement (10)
- les buses (13) avec l'élément de transmission (14) sont positionnées devant les éléments rotatifs (12), et le mécanisme de maille (11) avec la structure de maille à double couche entoure les buses (13), lesdites buses (13) pulvérisant de l'eau dans la direction opposée à la direction d'aspiration de l'air.

2. Un système de pré-refroidissement modulaire (10) selon la Revendication 1, dans lequel ; lesdits éléments rotatifs (12) ont une structure cylindrique.

3. Un système de pré-refroidissement modulaire (10) selon la Revendication 1, dans lequel ; il comprend un mécanisme mobile de maille à double pli (11) entourant les buses (13) le long de la circonférence de l'axe t 360°, entourant les éléments rotatifs (12).

4. Un système de pré-refroidissement modulaire (10) selon la Revendication 1, dans lequel ; pour fixer leurs emplacements, lesdites buses multiples (13) comprennent des cadres de buses multiples (19) incorporant un kit de collecteur et de l'ensemble de conduit.

5. Un système de pré-refroidissement modulaire (10) selon la Revendication 1, dans lequel ; il comprend au moins un éliminateur de gouttes (17) positionné vers la direction de refroidissement (S).

6. Un système de pré-refroidissement modulaire (10) selon la Revendication 1, dans lequel ; il comprend des ouïes d'aération extérieures (16) ayant une grille à l'arrière et agissant comme un pare-vent, qui ne sont pas tournées vers ladite direction de refroidissement (S) et qui sont positionnées sur la surface avant du système modulaire où l'air ambiant est d'abord introduit.

7. Un système de pré-refroidissement modulaire (10) selon la Revendication 1, dans lequel; afin d'éliminer la consommation d'eau inutile et l'utilisation de produits chimiques supplémentaires pour la calcification des tampons, il comprend : une unité de commande comprenant un capteur de température et un capteur d'humidité qui est connecté à un microprocesseur qui fournit un calcul psychrométrique de l'eau nécessaire à la saturation de l'air en fonction des données reçues du capteur de température et des capteurs d'humidité, et des capteurs de pression différentielle qui contrôlent la contamination du dispositif de réseau et de l'éliminateur de gouttes (17) à travers la pompe alimentant l'eau à utiliser par la buse (13) pour la pulvérisation.
